Europäisches Patentamt

European Patent Office

Office européen des brevets

(19)

(11) EP 0 977 181 A2

(12) EUROPEAN PATENT APPLICATION

(43) Date of publication:
02.02.2000 Bulletin 2000/05

(51) Int Cl.⁷: G11B 5/55

(21) Application number: 99305941.9

(22) Date of filing: 27.07.1999

(84) Designated Contracting States:
AT BE CH CY DE DK ES FI FR GB GR IE IT LI LU
MC NL PT SE
Designated Extension States:
AL LT LV MK RO SI

(30) Priority: 31.07.1998 US 126962

(71) Applicant: STMicroelectronics, Inc.
Carrollton, TX 75006-5039 (US)

(72) Inventors:
• Hvostov, Harry
  San Jose, California 95139 (US)
• Sun, Yu
  San Jose, California 95129 (US)

(74) Representative: Palmer, Roger et al
PAGE, WHITE & FARRER
54 Doughty Street
London WC1N 2LS (GB)

(54) **Method and apparatus for controlling a dual stage actuator in a disk drive system**

(57) A method and an apparatus controls a dual stage actuator in a disk drive system. In one embodiment the dual stage actuator includes a voice coil motor controlled by a motor controller and a microactuator, controlled by a microactuator controller. The voice coil motor drives a positioning arm having a distal end to which the microactuator is rotateably coupled. In contract to prior art, dual stage actuators, the microactuator is controlled by a position error signal (PES) that reflects the actual position of a read/write head attached to the microactuator and the motor controller is controlled by a summation of the PES and a relative position signal that reflects the position of the microactuator with respect to the positioning arm. This control causes the PES to result from a cascade of two independent equations; the first representing the microactuator and its controller and the second representing the voice coil motor and its controller. This enables the microactuator controller to be designed and activated independently of the motor controller.

Fig. 7

EP 0 977 181 A2

**EP 0 977 181 A2**

**Description**

The invention relates generally to magnetcic disk drive systems, and more particularly, to a method and apparatus for controlling a dual stage actuator in a disk drive system.

Improvements in the capacity of magnetic disk drive systems to store data have been achieved by moving tracks on the magnetic disk closer together to increase track density. The track width on such magnetic disks has been reduced to about 1 μm. The performance of servo systems that position a read/write head over such magnetic disks has also been improved to reduce tracking errors. Improved tracking accuracy is desirable to prevent the read/write head from straying to closely spaced adjacent tracks, and may be provided by servo systems having a bandwidth of nearly two kilohertz and a tracking accuracy of about 100 nm.

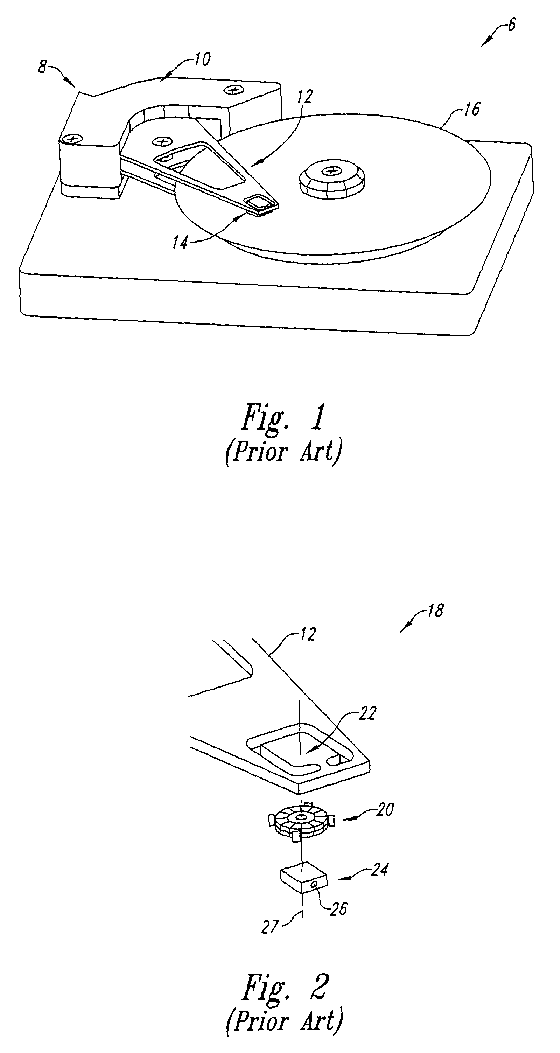

A disk drive system 6 with a conventional servo system 8 is shown in Figure 1. The servo system 8 includes a voice coil motor 10, a positioning arm 12, and a slider 14 mounted to the arm 12. The slider 14 supports a read/write head (not shown) which is swept over a magnetic storage disk 16 by the motor 10 and the arm 12. The servo system 8 has a bandwidth of about 500 to 700 hertz which is limited by the mechanical resonance of the arm 12 and low frequency bearing effects. The servo system 8 cannot provide the tracking accuracy required for magnetic disks with high track density because of its low bandwidth.

A dual stage actuator has been developed with a bandwidth of about 1.5 to 2.1 kilohertz. The dual stage actuator and its operation are described in *Angular Micropositioner For Disk Drives,* David A. Horsley, Angad Singh, Albert P. Pisano, and Roberto Horowitz, *Proceedings of the JEEE Microelectromechanical Systems (MEMS),* 1997, pages 454-459 (Horsley et al.) and in *Microactuators for High Density Disk Drives,* Sanjay K. Aggarwal, David A. Horsley, Roberto Horowitz, and Albert P. Pisano, *IEEE Proceedings of the American Control Conference,* Vol. 6, 1997 (Aggarwal et al.), both of which are incorporated herein by reference. The dual stage actuator comprises a microactuator mounted to the free end of the arm 12 shown in Figure 1. An exploded view of the elements of a dual stage actuator 18 are shown in Figure 2. A microactuator 20 is mounted to a gimbal 22 positioned at one end of the arm 12. A slider 24 with a read/write head 26 at its tip is mounted to the microactuator 20. The microactuator 20 may be rotated by a control voltage applied to capacitive plates (not shown) in the microactuator 20. The capacitive plates also are part of a capacitive sensing circuit that is used to obtain a signal indicating a position of the microactuator 20. The amount of rotation and the distance traveled by the read/write head 26 are dependent on the level of the control voltage. The microactuator 20 is rotated about a central axis 27 such that the read/write head 26 at the tip of the slider 24 may move with substantial acceleration while the center of the slider 24 remains stationary. The microactuator 20 is capable of moving the read/write head 26 with a high bandwidth of 1.5 to 2.1 kilohertz because only the microactuator 20 and slider 24 are moved rather than the entire arm 12. The motor 10 is used for coarse positioning and the microactuator 20 is used for fine positioning of the read/write head 26.

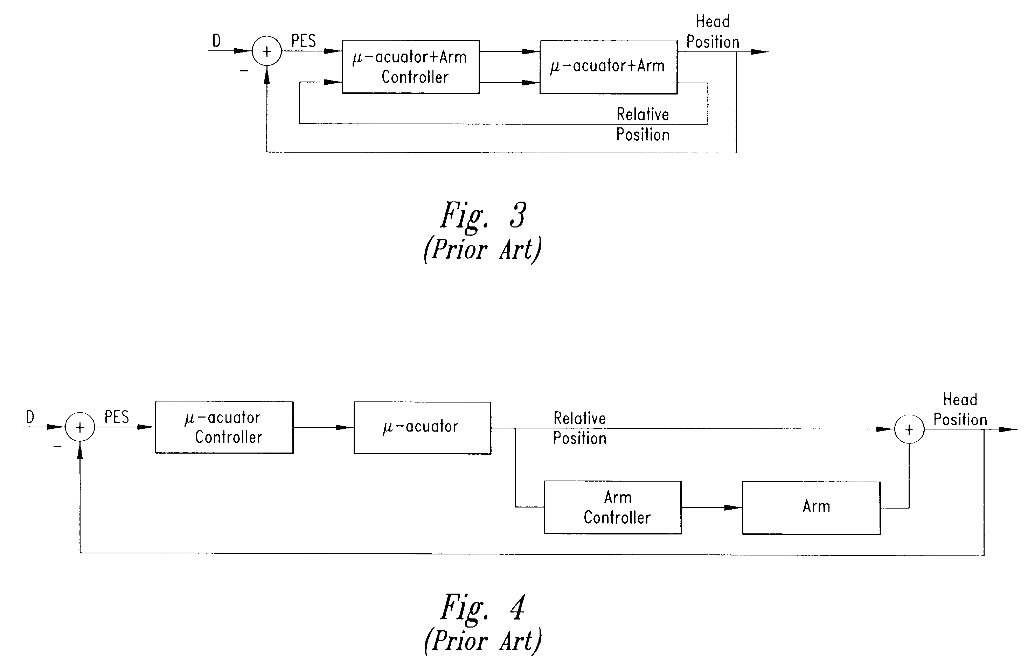

Two control methodologies are presented in Aggarwal et al. for controlling the dual stage actuator. The methodologies are based on the use of a position error signal (PES) generated by the read/write head 26 from data on the disk 16, and the position of the microactuator 20 relative to the arm 12. For example, in Figure 3 a multi-input/multi-output (MIMO) control design is presented. The implementation of such MIMO control designs is complex and requires an elaborate controller. A simpler single input/single output (SISO) control design is presented in Figure 4. This particular SISO control design also leads to an unnecessarily complex implementation.

The invention is directed to a method and apparatus for controlling a dual stage actuator in a disk drive system. In one embodiment the dual stage actuator includes a voice coil motor controlled by a motor controller and a microactuator, controlled by a microactuator controller. The voice coil motor drives a positioning arm having a distal end to which the microactuator is rotateably coupled. In contrast to prior art, dual stage actuators, the microactuator is controlled by a position error signal (PES) that reflects the actual position of a read/write head attached to the microactuator and the motor controller is controlled by a summation of the PES and a relative position signal that reflects the position of the microactuator with respect to the positioning arm. This control causes the PES to result from a cascade of two independent equations; the first representing the microactuator and its controller and the second representing the voice coil motor and its controller. This enables the microactuator controller to be designed and activated independently of the motor controller.

One embodiment of the invention is directed to a disk drive system that includes a storage disk and a voice coil motor having a positioning arm extending adjacent to the storage disk. A microactuator is movably mounted to the positioning arm and has sensing circuitry structured to generate a relative position signal indicating a position of the microactuator relative to the positioning arm. A read/write head is mounted to the microactuator and is structured to create a read signal from information embedded in tracks of the storage disk. A decoding circuit is coupled to receive the read signal from the read/write head and is structured to derive a position error signal from the read signal indicating a position of the read head relative to a target position. A VCM controller coupled to the decoding circuit and a microactuator sensing circuitry is structured to generate, in response to the position error signal and the relative position signal, a motor control signal that causes the voice coil motor to move the positioning arm. In addition, a microactuator controller coupled to the decoding circuit is structured to generate, in response to the position error signal, a microactuator control signal that causes the microactuator to move relative to the positioning arm.

Some embodiments of the invention will now be described by way of example and with reference to the accompanying drawings in which:

Figure 1 is a perspective view of a disk drive system according to the prior art.

Figure 2 is an exploded view of a portion of a dual stage actuator according to the prior art.

Figure 3 is a block diagram of a multi-input/multi-output control design for a dual stage actuator according to the prior art.

Figure 4 is a block diagram of a single input/single output control design for a dual stage actuator according to the prior art.

Figure 5 is a schematic diagram of a dual stage actuator showing control variables according to an embodiment of the invention.

Figure 6 is a block diagram of a single input/single output control design according to an embodiment of the invention.

Figure 7 is a block diagram of a disk drive system and an analog control circuit for controlling a dual stage actuator according to an embodiment of the invention.

Figure 8 is a block diagram of a disk drive system and a digital control circuit for controlling a dual stage actuator according to an embodiment of the invention.

Figure 9 is a flowchart of a software routine for controlling movements of a dual stage actuator according to an embodiment of the invention.

A method for controlling the dual stage actuator 18 shown in Figure 2 will now be described according to an embodiment of the invention. The method provides for a dual stage actuator 18 in which the microactuator 20 is designed and controlled independently of the design and control of the motor 10. This is a substantial improvement over prior methods which require that the microactuator 20 and the motor 10 be designed and controlled in concert with one another.

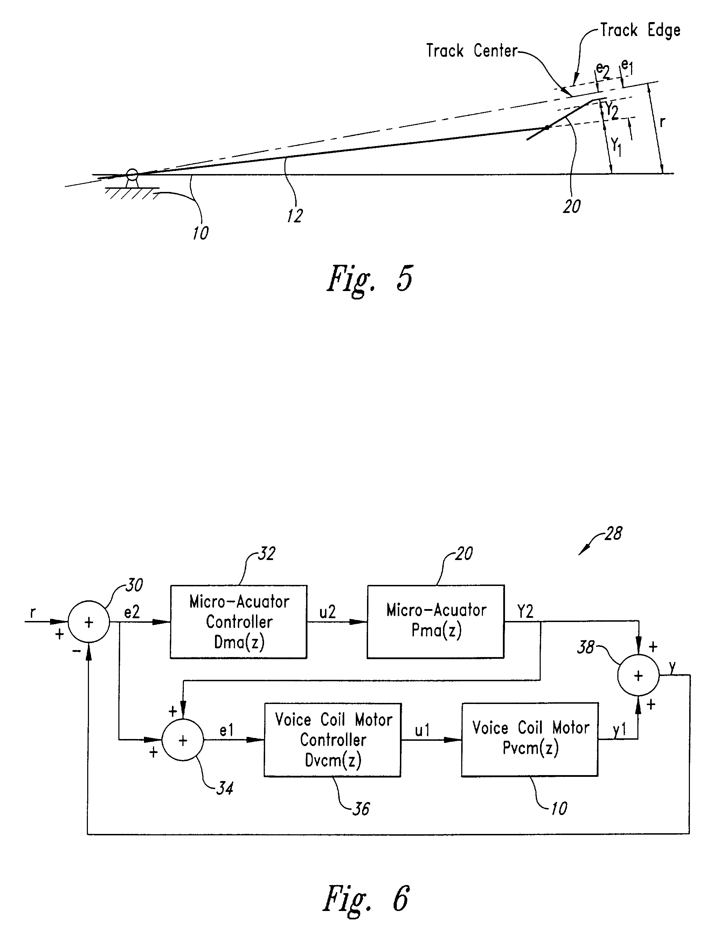

A schematic representation of the dual stage actuator 18 is shown in Figure 5 along with four control variables $e_1$, $e_2$, $y_1$, and $y_2$. The schematic representation in Figure 5 corresponds to the dual stage actuator 18 shown in Figure 2. and the lines in Figure 5 are given the corresponding reference numerals shown in Figures 1 and 2. The motor 10, arm 12, and microactuator 20 are shown as line segments. The variable $y_1$ indicates the position of the arm 12 relative to the motor 10, and the variable $y_2$ indicates the position of the microactuator 20 relative to the arm 12. The variable $e_1$ indicates a position error of the arm 12, the variable $e_2$ corresponds to the position error signal (PES) generated by the read/write head 26.

An actuator controller 28 for the dual stage actuator 18 according to an embodiment of the invention is shown in Figure 6. Several of the variables shown in Figure 6 correspond to the variables shown in Figure 5. The actuator controller 28 is implemented to control the dual stage actuator 18 in the following manner. A position error signal (PES) $e_2$ is decoded from a read signal generated from the read/write head 26 as it passes over a position data wedge in the disk 16. The position signal y indicates the position of the read/write head 26 over the wedge and methods of generating the position error signal $e_2$ are well known to those skilled in the art. The position signal y (which is not directly available) is subtracted from a reference track signal r at the first summing node 30 to generate the head position error signal $e_2$ (PES) which indicates the tracking error of the read/write head 26. The head position error signal $e_2$ is provided to a microactuator controller 32 that generates a first control signal $u_2$ for the microactuator 20. The signal $u_2$ is supplied to the microactuator 20 to cause the microactuator 20 to move to a position $y_2$ relative to the arm 12. The PES $e_2$ is added to the relative position $y_2$ at a second summing node 34 to generate a motor error signal $e_1$ that is supplied to a voice coil motor controller 36. The voice coil motor controller 36 generates a second control signal $u_1$ that is provided to the motor 10. The motor 10 moves the arm 12 according to the signal $u_1$ to a position $y_1$ relative to the motor 10. The position of the read/write head 26, indicated by the position signal y, is equal to a sum of the relative position $y_2$ of the microactuator 20 and the position of the arm 12. This is shown with a third summing node 38 in Figure 6.

The actuator controller 28 is expressed in the z domain according to conventions known to those skilled in the art. Each of the blocks shown in Figure 6 is represented mathematically by a transfer function in the z domain. For example, the microactuator controller 32 has a transfer function Dna(z), the microactuator 20 has a transfer function Pna(z), the voice coil motor controller 36 has a transfer function Dvcm(z), and the voice coil motor has a transfer function Pvcm(z). The functions of the actuator controller 28 may be expressed in the following set of equations.

$$r - y = e_2 \qquad\qquad (1)$$

$$e_1 * Dvcm * Pvcm = y_1 \tag{2}$$

$$e_2 + y_2 = e_1 \tag{3}$$

$$e_2 * Dma * Pma = y_2 \tag{4}$$

$$y_1 + y_2 = y \tag{5}$$

In Equations 1-5, the variables $e_2$ and $y_2$ represent quantities that may be measured directly from the dual stage actuator 18. Equations 1-5 may be solved in the following manner.

$$y = \frac{Dma * Pma + Dvcm * Pvcm + Dvcm * Pvcm * Dma * Pma}{(1 + Dma * Pma)(1 + Dvcm * Pvcm)}r \tag{6}$$

$$y_2 = \frac{Dma * Pma}{(1 + Dma*Pma)(1 + Dvcm*Pvcm)}r \tag{7}$$

$$y_1 = \frac{Dvcm*Pvcm}{1 + Dvcm*Pvcm}r \tag{8}$$

$$e_2 = \frac{1}{(1 + Dma*Pma)(1 + Dvcm*Pvcm)}r \tag{9}$$

$$e_1 = \frac{1}{(1 + Dvcm*Pvcm)}r \tag{10}$$

A substantial advantage of the actuator controller 28 is represented in equation (9). The PES $e_2$ results from a cascade of two independent equations representing the microactuator 20 and its controller 32 (1+Dma*Pma) and the voice coil motor 10 and its controller 36 (1+Dvcm*Pvcm). The microactuator controller 32 may therefore be designed and activated independently of the voice coil motor controller 36 in an implementation of the actuator controller 28.

For dual stage actuator control design, one major problem is the limited linear moving range of the microactuator 20 which only needs to cover the high frequency, low amplitude run-out and leaves the low frequency, high amplitude portion to the VCM. Such a division of control functions is known as "Control Separation."

The ability of the dual stage actuator controller 28 to provide control separation while being designed independently can be appreciated by analyzing Equations (6)-(10) as follows. Let:

$$T_1 = \frac{Dvcm*Pvcm}{1 + Dvcm*Pvcm} \tag{11}$$

$$T_2 = \frac{Dma*Pma}{1 + Dma*Pma} \tag{12}$$

$$S_1 = \frac{1}{1 + Dvcm*Pvcm} \tag{13}$$

$$S_2 = \frac{1}{1 + Dma*Pma} \tag{14}$$

Combining Equations (11)-(14) with (6)-(10) produces:

$$y_2 = T_2 * \frac{1}{1+Dvcm*Pvcm}r = T_2 * S_1 * r \tag{15}$$

$$y_1 = T_1 *r \tag{16}$$

$$e_2 = S_1 *S_2 *r \tag{17}$$

$$e_1 = S_1 *r \tag{18}$$

Another significant advantage of the structure 28 shown in Figure 6 exists in Equations (15) and (16). Given that $y_1$ depends on $T_1$ but not $T_2$ and $y_2$ depends on $T_2$ but not $T_1$, the VCM and microactuator controllers 36, 32 can be designed in the same way in which two conventional single stage controllers are designed independently. For example, with VCM bandwidth around 500 Hz and microactuator bandwidth around 1.5 Khz-2 Khz, then $S_1(s)$ will have a second order roll up at the low frequency range (0-300 Hz) and $T_2(s)$ will remain 0 db from low frequency and start to roll off about 3-4 Khz. It means $y_2/r$ has a second order roll up at low frequency and only starts to roll off at high frequency. In addition, $y_1/r$ remains 0 db at low frequency and rolls off earlier than $y_2/r$.

Thus, $y_1 >> y_2$ at low frequency range, and the VCM controller 36 dominates the control effort; and $y_2 >> y_1$ at high frequency range, and the microactuator controller 32 dominates the control effort. At middle frequency range, the microactuator controller makes up for the limited bandwidth of the VCM and improves the attenuation of the tracking error. Thus, control effort separation is automatically guaranteed by design.

The actuator controller 28 can be represented in the discrete domain by the following equation 11:

$$\begin{bmatrix} X_1(k+1) \\ X_2(k+1) \end{bmatrix} = \begin{bmatrix} A_1 & 0 \\ 0 & A_2 \end{bmatrix} \begin{bmatrix} X_1(k) \\ X_2(k) \end{bmatrix} + \begin{bmatrix} B_1 & 0 \\ 0 & B_2 \end{bmatrix} \begin{bmatrix} u_1(k) \\ u_2(k) \end{bmatrix} \tag{19}$$

$$\begin{bmatrix} y(k) \\ y_2(k) \end{bmatrix} = \begin{bmatrix} C_1 & C_2 \\ 0 & C_2 \end{bmatrix} \begin{bmatrix} X_1(k) \\ X_2(k) \end{bmatrix}$$

where $X_1$ and $X_2$ are internal states of the motor 10 and the microactuator 20, respectively. $A_1$, $B_1$, and $C_1$ are a state space representation of the motor 10. $A_2$, $B_2$, and $C_2$ are a state space representation of the microactuator 20. y, $y_2$, $u_1$, and $u_2$ correspond to the control variables shown in Figure 6. The solution of the decoupled estimator gain matrix to the Equation (19) can be obtained by a backward calculation as shown in Equation (20):

$$L = \begin{bmatrix} L_1 & -L_1 \\ 0 & L_2 \end{bmatrix} \tag{20}$$

A control signal for the microactuator 20 may be calculated based on the following three equations:
Prediction Stage:

$$\overline{X}_2(k) = A_2 * \hat{X}_2(k-1) + B_2 * u_2(k-1) \tag{21}$$

Update Stage:

$$\hat{X}_2(k) = \overline{X}_2(k) + L_2 *(-y_2(k) - C_2 * \overline{X}_2(k)) \tag{22}$$

Control Signal:

$$u_2(k) = -K_2 * \overset{\wedge}{X}_2(k) \tag{23}$$

A control signal for the motor 10 may be calculated based on the following three equations:

Prediction Stage:

$$\overline{X}_1(k) = A_1 * \overset{\wedge}{X}_1(k\text{-}1) + B_1 * u_1(k\text{-}1) \tag{24}$$

Update Stage:

$$\overset{\rightarrow}{\overline{X}}_1(k) = \overline{X}_1(k) + L_1 * \left( e(k) + y_2(k) - C_1 * \overline{X}_1(k) \right) \tag{25}$$

Control Signal:

$$u_1(k) = -K_1 * \overset{\wedge}{X}_1(k) \tag{26}$$

where (k-l) represents a prior sample time and k represents a present sample time.

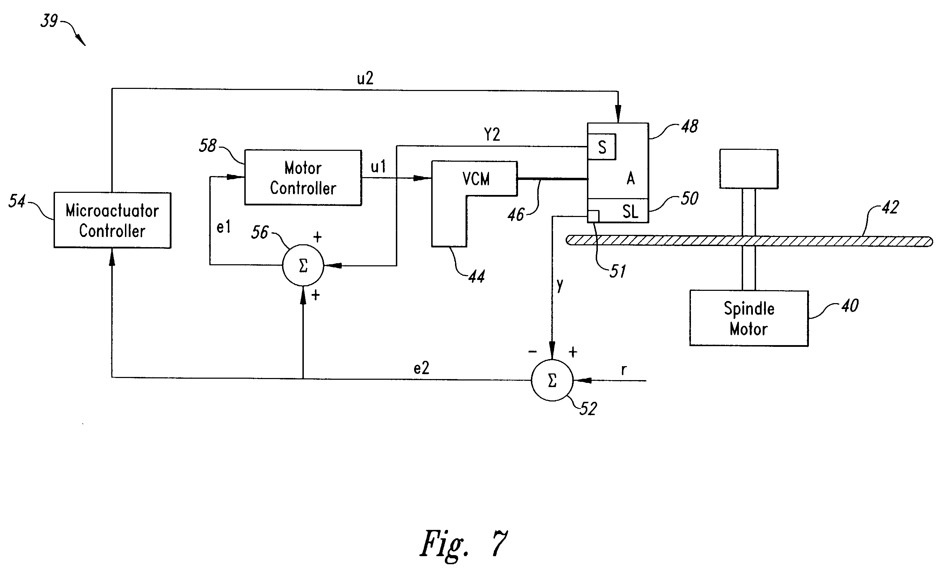

A control circuit 39 for implementing the actuator controller 28 is shown in Figure 7 according to an embodiment of the invention. A spindle motor 40 rotates a magnetic storage disk 42 and a voice coil motor (VCM) 44 supports a positioning arm 46 and a microactuator 48 fixed to an end of the arm 46. The microactuator 48 includes a capacitive microsensor 49 that produces a relative position signal $Y_2$ that reflects the relative position of the microactuator 48 with respect to the arm 46, as described in Horsley *et al.* referenced above. A slider 50 having a read/write head 51 is fixed to a bottom of the microactuator 48 such that, as the microactuator 48 rotates the read/write head 51 is moved relative to the arm 46. A read signal is generated by the read/write head and decoded to produce a position error signal $e_2$ according to methods well known to those skilled in the art. The PES $e_2$ is provided to a microactuator controller 54 that generates a control signal $u_2$ to be applied to control a movement of the microactuator 48. The microactuator 48 is rotated according to the control signal $u_2$ to move the read/write head 51 over the appropriate track to eliminate the tracking error represented by the PES $e_2$. The PES $e_2$ is added to the signal $y_2$ in a second summing circuit 56 to generate a motor error signal $e_1$. The motor error signal $e_1$ is provided to a second controller 58 that generates a control signal $u_1$ to control the voice coil motor 44. The motor moves the arm 46 to eliminate the relative position of the read/write head with respect to the arm 46 such that the microactuator 48 is aligned with an axis of the arm 46.

The control circuit 39 is a direct implementation of the actuator controller 28 shown in Figure 6. An advantage of the control circuit 39 is that the first controller 54 and the microactuator 48 may be designed independently of the second controller 58 and the voice coil motor 44 because Equation (9) is a cascade equation multiplying the characteristics of the first controller 54 with the second controller 58. In other control designs that do not have this advantage the controller for the microactuator 48 must be designed in concert with the controller for the voice coil motor 44 to achieve optimal performance and control separation.

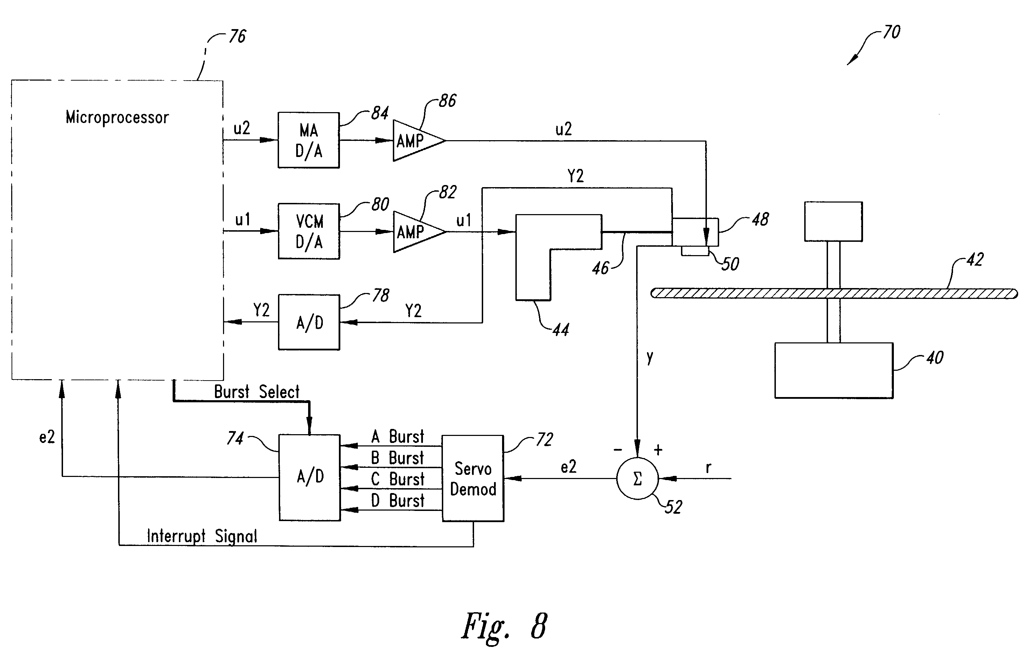

An alternate circuit 70 for implementing the control design 28 is shown in Figure 8. The circuit 70 includes several elements similar to those shown in Figure 7. and similar elements have been given the same reference numerals for purposes of brevity. The circuit 70 includes a servo demodulator circuit 72 that demodulates the PES $e_2$. The PES $e_2$ is demodulated into an ABCD burst pattern according to methods well known to those skilled in the art. The ABCD burst pattern is provided to an analog-to-digital (A/D) converter 74 which in turn provides a digital PES $e_2$ to a microprocessor 76. The servo demodulator circuit 72 also provides an interrupt signal to the microprocessor 76 based on the PES $e_2$ whenever the read/write head passes over a wedge in the disk 42. In response to the interrupt signal, the microprocessor 76 generates and provides a burst select signal to the A/D converter 74, causing the A/D converter to sample A, B, C, D sequentially. The microprocessor 76 reads the signals and decodes the PES $e_2$.

A second A/D converter 78 is coupled to receive the signal $y_2$ generated by the capacitive sensing circuit in the microactuator 48. The second AID converter 78 produces a digital signal $y_2$ which is provided to the microprocessor 76. The microprocessor 76 carries out a software routine for combining the aforementioned signals to generate the control signals $u_1$ and $u_2$. The control signal $u_1$ is provided to a first digital-to-analog (D/A) converter 80 to produce an analog control signal $u_1$ which is amplified by an amplifier 82 and then provided to the motor 44. The control signal $u_2$

is provided to a second D/A converter 84 which produces an analog control signal $u_2$ that is amplified by an amplifier 86 and provided to the microactuator 48.

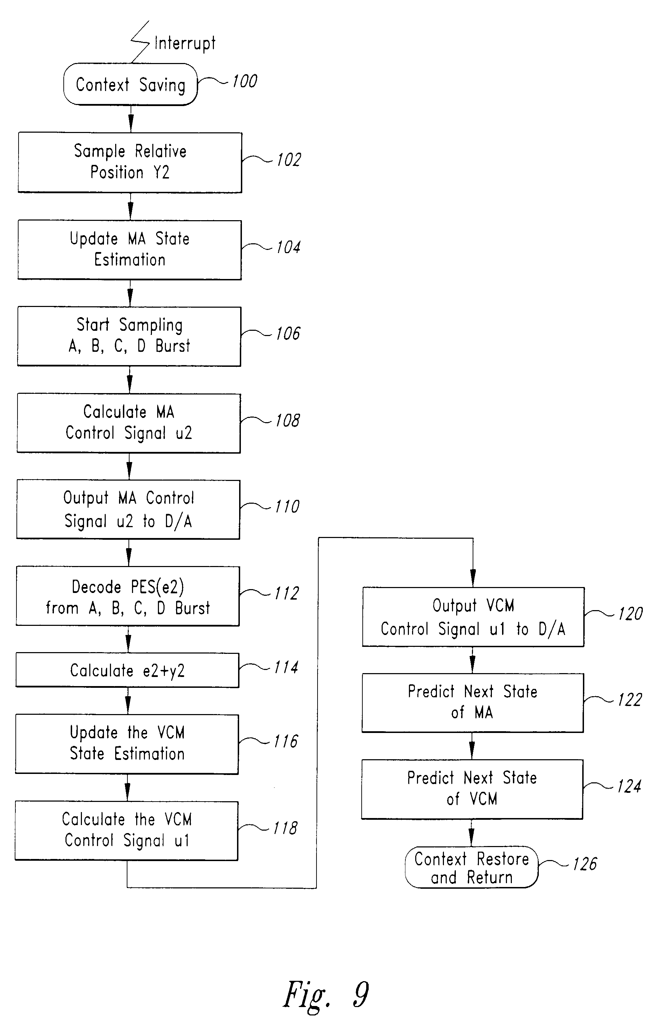

The microprocessor 76 operates an actuator control software routine shown in Figure 9 according to an embodiment of the invention to control the motor 44 and the microactuator 48 to position the read/write head over tracks in the disk 42. The software routine is run when the read/write head passes over a data wedge in the disk 42 and the servo demodulator circuit 72 generates an interrupt signal in response to the data wedge. In step 100, the context of the microprocessor 76 is saved so that it may be resumed at the end of the actuator control software routine.

In step 102, the relative position signal $y_2$ of the microactuator 48 with respect to the arm 46 is sampled, and in step 104 a state estimation for the microactuator 48 is updated. In step 106 the ABCD burst is sampled. In step 108, the control signal $u_2$ is generated based on the PES $e_2$ and in step 110 is output to the converter 84 which is then amplified by the amplifier 86 to control a movement of the microactuator 48. The microactuator 48 is thereby moved to position the read head over a center of a track detected in the ABCD burst.

In step 112, the PES $e_2$ is decoded from the ABCD burst and in step 114 the PES $e_2$ is added to the signal $y_2$ provided by the converter 78. A state of the motor 44 is updated in step 116. In step 118, the control signal $u_1$ is generated and output to the converter 80, amplified by the amplifier 82, and then applied to the motor 44 to actuate the motor 44 and move the arm 46. The arm 46 is moved to eliminate the distance between the read/write head 51 and the arm 46 and align the microactuator 48 with the arm 46. In steps 122 and 124, the next states of the microactuator 48 and the motor 44 are predicted, and in step 126 the context is restored and the microprocessor 76 returns to carry out the original task. According to this embodiment of the invention, the microactuator 48 is moved first to position the read/write head 51 over the track, and the motor 44 is subsequently actuated to move the arm. The control design 28 according to the embodiment of the invention makes it possible for the motor 44 and the microactuator 48 to be moved independently of each other.

From the foregoing it will be appreciated that, although specific embodiments of the invention have been described herein for purposes of illustration, various modifications may be made without deviating from the spirit and scope of the invention. Accordingly, the invention is not limited except as by the appended claims.

**Claims**

1. A disk drive system comprising:

   a storage disk;
   a voice coil motor having a positioning arm extending adjacent to the storage disk;
   a microactuator mounted to the positioning arm and being movable relative to the positioning arm, the microactuator having sensing circuitry structured to generate a relative position signal indicating a position of the microactuator relative to the positioning arm;
   a read head mounted to the microactuator, the read head structure to create a read signal from information read from the storage disk;
   a decoding circuit coupled to receive the read signal from the read head and being structured to derive a position error signal from the read signal indicating a position of the read head relative to a target position;
   a VCM controller coupled to the decoding circuit and the microactuator sensing circuitry, the VCM controller being structured to generate, in response to the position error signal and the relative position signal, a motor control signal that causes the voice coil motor to move the positioning arm; and
   a microactuator controller coupled to the decoding circuit and structured to generate, in response to the position error signal, a microactuator control signal that causes the microactuator to move relative to the positioning arm.

2. The disk drive system of claim 1 wherein the VCM controller includes a microprocessor, a first analog/digital converter, and a first digital/analog converter and the microactuator controller includes the microprocessor, a second analog/digital converter, and a second digital/analog converter.

3. The disk drive system of claim 2 wherein the VCM controller further includes a servo demodulator coupled between the first analog/digital converter and the decoding circuit, the servo demodulator being structured to receive the position error signal from the decoding circuit in analog form and create plural burst signals from the analog position error signal, wherein the first analog/digital converter is structured to create a digital position error signal from the plural burst signals and transmit the digital position error signal to the microprocessor.

4. The disk drive system of claim 1, further comprising a summing circuit coupled to the decoding circuit, the microactuator sensing circuitry, and the VCM controller, the summing circuit being structured to add the position error signal and the relative position signal to create a motor error signal that the VCM controller uses to create the motor control signal.

5. A circuit for controlling a dual stage actuator having a first actuator movably coupled to a positioning arm controlled by a second actuator, the circuit comprising:

first means for generating a position error signal that reflects a position of the first actuator relative to a target position;

second means for generating a relative position signal that reflects a position of the first actuator relative to the second actuator;

a first actuator controller coupled to the first means and structured to generate, in response to the position error signal, a first actuator control signal that causes the first actuator to move relative to the positioning arm; and

a second actuator controller coupled to the first and second means, the second actuator controller being structured to generate, in response to the position error signal and the relative position signal, a second actuator control signal that causes the second actuator to move the positioning arm and the first actuator.

6. The circuit of claim 5 wherein the first actuator controller includes a microprocessor, a first analog/digital converter, and a first digital/analog converter and the second actuator controller includes the microprocessor, a second analog/digital converter, and a second digital/analog converter.

7. The circuit of claim 6 wherein the first means includes a servo demodulator coupled to the second analog/digital converter, the servo demodulator being structured to receive the position error signal in analog form and create plural burst signals from the analog position error signal, wherein the second analog/digital converter is structured to create a digital position error signal from the plural burst signals and transmit the digital position error signal to the microprocessor.

8. The circuit of claim 5 wherein the first actuator is a microactuator and the second actuator is a voice coil motor of a computer storage device that includes a storage disk and the first means includes a read head attached to the first actuator, the read head being structured to read position information off of the storage disk.

9. The circuit of claim 8, further comprising a summing circuit coupled to the first and second means and the second actuator controller, the summing circuit being structured to add the position error signal and the relative position signal to create a motor error signal that the second actuator controller uses to create the second actuator control signal.

10. A method for controlling a first actuator pivotally coupled to a second actuator having an axis, the first actuator being aligned with the axis of the second actuator when a relative position between the first and second actuators is zero, the first actuator being positioned relative to a target location, the method comprising:

sensing a position of the first actuator relative to the target position;

moving the first actuator relative to the second actuator to a position coincident with the target position;

determining the relative position between the first and second actuators; and

moving the second actuator to a position of reduced relative position between the first and second actuators.

11. The method of claim 10, further comprising moving the first actuator to a position coincident with the target position while moving the second actuator.

12. A method of controlling a position of a read/write head in a disk drive system, the head being attached to a microactuator mounted to a positioning arm of a voice coil motor, the positioning arm having an axis, the method comprising:

sensing the position of the head;

calculating a position error as a distance between the position of the head and a reference position;

moving the microactuator such that the position of the head coincides with the reference position and the microactuator is out of alignment with the axis of the positioning arm; and

moving the positioning arm of the voice coil motor toward an alignment of the axis of the positioning arm with the microactuator.

13. The method of claim 12 wherein the step of moving the positioning arm of the voice coil motor comprises moving the microactuator such that the position of the head coincides with the reference position.

Fig. 1
(Prior Art)

Fig. 2
(Prior Art)

*Fig. 3*
*(Prior Art)*

*Fig. 4*
*(Prior Art)*

Fig. 5

Fig. 6

Fig. 7

*Fig. 8*

Interrupt

Context Saving — *100*

Sample Relative
Position Y2 — *102*

Update MA State
Estimation — *104*

Start Sampling
A, B, C, D Burst — *106*

Calculate MA
Control Signal u2 — *108*

Output MA Control
Signal u2 to D/A — *110*

Decode PES(e2)
from A, B, C, D Burst — *112*

Calculate e2+y2 — *114*

Update the VCM
State Estimation — *116*

Calculate the VCM
Control Signal u1 — *118*

Output VCM
Control Signal u1 to D/A — *120*

Predict Next State
of MA — *122*

Predict Next State
of VCM — *124*

Context Restore
and Return — *126*

*Fig. 9*